# EUROPEAN PATENT APPLICATION

(11) **EP 4 564 271 A1**
(43) Date of publication of application: **04.06.2025**
(21) Application number: 24210545.0
(22) Date of filing: 04.11.2024
(51) Int. Cl.: G06Q 30/0601, G06Q 30/0251, H04L 51/02, G06N 3/045

(54) **INFORMATION PROCESSING APPARATUS, INFORMATION PROCESSING METHOD, AND CONVERSATION SYSTEM**

(30) Priority: 28.11.2023 JP 2023200998; 29.08.2024 JP 2024147259
(71) Applicant: Ricoh Company, Ltd., Tokyo 143-8555 (JP)
(72) Inventor: Shimono, Hiroya, Tokyo, 143-8555 (JP); Matsubara, Mayumi, Tokyo, 143-8555 (JP); Nose, Masaki, Tokyo, 143-8555 (JP)
(74) Representative: Marks & Clerk LLP

(57) **Abstract**

An information processing apparatus (11) includes a model storage unit (105, 106), a conversation history storage unit (104) and a conversation control unit (102). The model storage unit (105, 106) stores a plurality of models including a large-scale language model and a task-specific model different from the large-scale language model. The task-specific model have been acquired by machine learning specialized in a specific task. The conversation history storage unit (104) stores a history of conversations in which a conversation agent participates. The conversation control unit (102) selects one or more models from among the plurality of models based on the history of conversations and creates a response message of the conversation agent using output data of the selected model.

## Description

### BACKGROUND

### Technical Field

The present disclosure relates to an information processing apparatus, an information processing method, and a conversation system.

### Related Art

A conversation system is known to allow a computer to have a conversation with a human being. For example, the messages to which the computer responds are generated using a machine learning model.

However, in the related art, it is difficult for the computer to respond an appropriate response according to the content of the conversation.

### SUMMARY

Embodiments of the present disclosure described herein provide a novel information processing apparatus including a model storage unit, a conversation history storage unit and a conversation control unit. The model storage unit stores a plurality of models including a large-scale language model and a task-specific model different from the large-scale language model. The task-specific model have been acquired by machine learning specialized in a specific task. The conversation history storage unit stores a history of conversations in which a conversation agent participates. The conversation control unit selects one or more models from among the plurality of models based on the history of conversations and creates a response message of the conversation agent using output data of the selected model.

Embodiments of the present disclosure described herein provide a novel information processing method. The method includes: storing, in a memory, a plurality of models including a large-scale language model and a task-specific model different from the large-scale language model, the task-specific model having been acquired by machine learning specialized in a specific task; storing, in the memory, a history of conversations in which a conversation agent participates; selecting one or more models from among the plurality of models based on the history of conversations; and creating a response message of the conversation agent using output data of the selected model.

Embodiments of the present disclosure described herein provide a novel conversation system including a model storage unit, a conversation history storage unit, a conversation acquisition unit, a conversation control unit, and a response unit. The model storage unit stores a plurality of models including a large-scale language model and a task-specific model different from the large-scale language model. The task-specific model have been acquired by machine learning specialized in a specific task. The conversation history storage unit stores a history of conversations in which a conversation agent participates. The conversation acquisition unit acquires conversation data from a user terminal. The history of conversations is based on the conversation data. The conversation control unit selects one or more models from among the plurality of models based on the history of conversations and creates a response message of the conversation agent using output data of the selected model. The response unit transmits the response message to the user terminal.

With the above-described embodiments, a computer responds appropriately according to the content of the conversation.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram of a usage scene of a conversation system according to an embodiment of the present disclosure;
FIG. 2 is a diagram of a conversation according to an embodiment of the present disclosure;
FIG. 3 is a diagram illustrating the overall configuration of a conversation system according to an embodiment of the present disclosure;
FIG. 4 is another diagram illustrating the overall configuration of a conversation system according to an embodiment of the present disclosure;
FIG. 5 is a block diagram illustrating a hardware configuration of an information processing apparatus according to an embodiment of the present disclosure;
FIG. 6 is a block diagram illustrating a hardware configuration of a user terminal according to an embodiment of the present disclosure;
FIG. 7 is a functional block diagram of an information processing apparatus according to an embodiment of the present disclosure;
FIG. 8 is a functional block diagram of a communication support apparatus and a terminal apparatus according to an embodiment of the present disclosure;
FIG. 9 is a diagram illustrating a storage unit according to an embodiment of the present disclosure;
FIG. 10 is a diagram illustrating a history of conversations according to an embodiment of the present disclosure;
FIG. 11 is a diagram illustrating another history of conversations according to an embodiment of the present disclosure;
FIG. 12 is a diagram illustrating a prompt according to an embodiment of the present disclosure;
FIG. 13 is a flowchart of conversation control processing according to an embodiment of the present disclosure;
FIG. 14 is a flowchart of conversation control processing (selection of a recommendation engine and a large-scale language model) according to an embodiment of the present disclosure;
FIG. 15 is a flowchart of a process of question and answer according to an embodiment of the present disclosure;
FIG. 16 is a flowchart of a process for problem solving according to an embodiment of the present disclosure;
FIG. 17 is a table of an intention of a conversation according to an embodiment of the present disclosure; and
FIG. 18 is a sequence diagram illustrating conversation control processing according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of an information processing apparatus, an information processing method, a storage medium, and a conversation system according to embodiments of the present disclosure with reference to the drawings. The present disclosure can solve the problem of selecting a large-scale language model and a machine learning model different from the large-scale language model according to a history of conversations and responding appropriately.

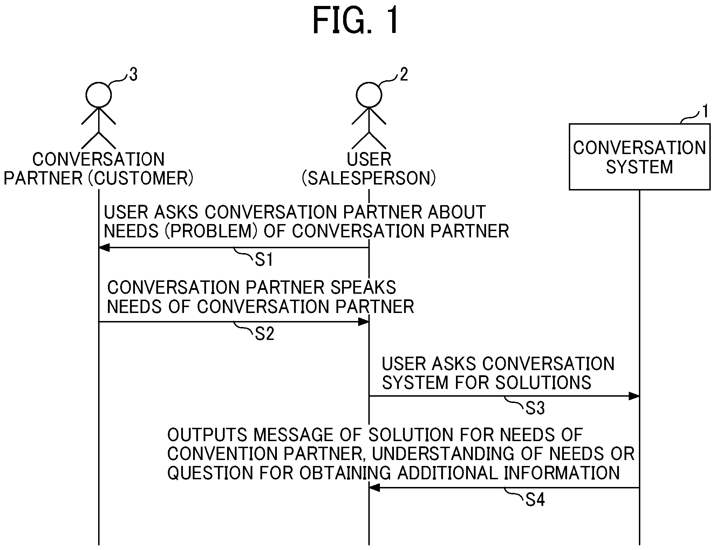

FIG. 1 is a diagram of a usage scene of a conversation system according to an embodiment of the present disclosure. The present disclosure is assumed to be used in a business negotiation (e.g., in a case where a sales person 2 recommends a product to a customer 3). A description is given below of the overall processing flow.

In step S1, a user (sales person) 2 asks a conversation partner (customer) 3 about the need (which is also referred to as problem) of the conversation partner (customer) 3.

In step S2, the conversation partner (customer) 3 speaks the need of the conversation partner (customer) 3 in response to the inquiry from the user (sales person) 2 in step S1.

In step S3, the user (sales person) 2 asks a conversation system 1 for the solution of the need of the conversation partner (customer) 3.

In step S4, the conversation system 1 outputs a response message in response to the inquiry of the step S3. Specifically, the response message is a message of a solution to the need of the conversation partner (customer) 3, understanding of the need (e.g., a potential need), or a question regarding the need (e.g., a question for obtaining additional information).

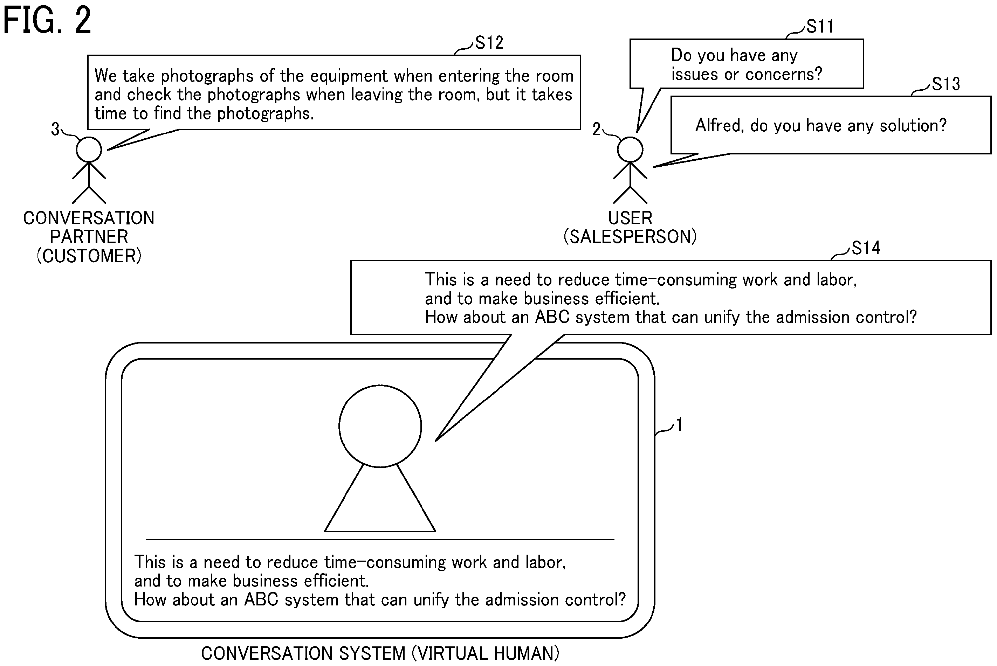

FIG. 2 is a diagram of a conversation according to an embodiment of the present disclosure.

In step S11, an example of the content (specifically, "Do you have any issues or concerns?") spoken by the user (sales person) 2 in step S1 in FIG. 1 is indicated.

In step S12, an example of the content ("We take photographs of the equipment when entering the room, and check the photographs when leaving the room, but it takes time to find the photographs.") spoken by the conversation partner (customer) 3 in step S2 in FIG. 1 is indicated.

In step S13, an example of the content ("Alfred, do you have any solution?") spoken by the user (sales person) 2 in step S3 in FIG. 1 is indicated. It is assumed that the conversation system 1 starts to generate a response message in response to a predetermined inquiry message (e.g., "Alfred" in FIG. 2).

In step S14, an example of the content ("This is a need to reduce time-consuming work and labor, and to make business efficient. How about the ABC system that can unify the admission control?") spoken by the conversation system 1 in step S4 in FIG. 1 is indicated. The conversation system 1 may reproduce voice to output the response message or may display text to output the response message. Alternatively, the conversation system 1 may output both voice and text as illustrated in FIG. 2.

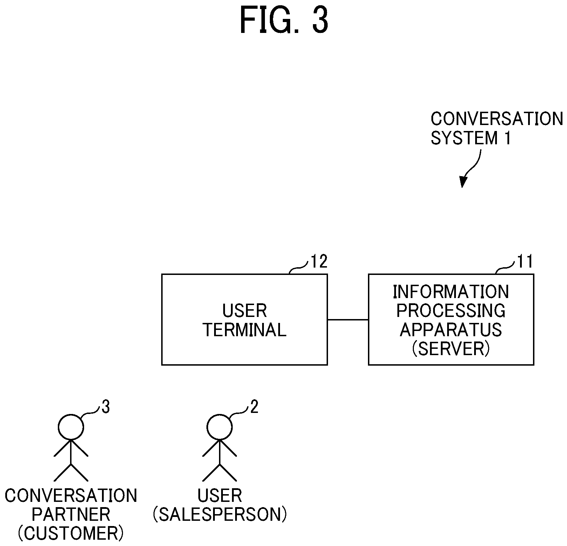

FIG. 3 is a diagram illustrating the overall configuration of a conversation system 1 according to an embodiment of the present disclosure. The conversation system 1 includes an information processing apparatus (server) 11 and a user terminal 12. In the present specification, the information processing apparatus 11 and the user terminal 12 are described as separate apparatuses. However, the information processing apparatus 11 and the user terminal 12 may be implemented by a single apparatus (i.e., the information processing apparatus 11 may have the function of the user terminal 12).

The information processing apparatus 11 selects one or more machine learning models from among two or more machine learning models based on the history of the conversations, and use output data of the selected machine learning model to generate a response message. The information processing apparatus 11 is implemented by one or more computers. For example, the information processing apparatus 11 is a server.

The group of apparatuses or devices according to the embodiments of the present disclosure are merely one example of a plurality of computing environments that implement the embodiments disclosed in the present specification. In some embodiments, the information processing apparatus 11 includes a plurality of computing devices, such as a server cluster. The plurality of computing devices are configured to communicate with one another through any type of communication link including, for example, a network or a shared memory, and perform the processes disclosed in the preset specification.

The user terminal 12 transmits data of voice spoken by a human to the information processing apparatus 11, and receives and outputs (reproduces voice or displays text) a response message generated by the information processing apparatus 11. The user terminal 12 has a microphone function, a speaker function, and a display function. For example, the user terminal 12 is a tablet, a smartphone, or a personal computer.

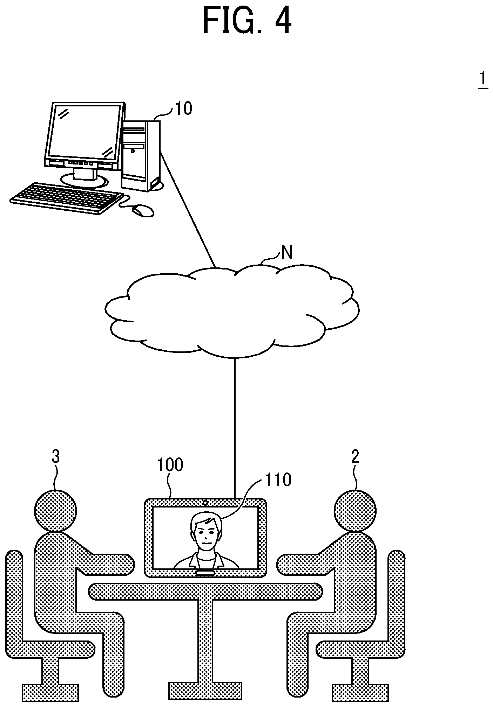

FIG. 4 is another diagram illustrating the overall configuration of a conversation system 1 according to an embodiment of the present disclosure. In FIG. 4, the conversation system 1 includes a communication support apparatus 10 and a terminal apparatus 100 that are connected to a communication network N such as the Internet and a local area network (LAN).

As an example of a usage scene, a sales person 2 brings the terminal apparatus 100 displaying a virtual sales person 110 to a customer 3 for business negotiation, and performs business negotiation with the customer 3 including the virtual sales person 110. The business negotiation is an example of communication. The sales person 2 is an example of a host participating in the communication, and the customer 3 is an example of a guest participating in the communication. The virtual sales person 110 is an example of a conversation agent. The conversation agent is a virtual sales person that supports business negotiations.

The terminal apparatus 100 is an information terminal such as a personal computer (PC), a tablet terminal, or a smartphone, which is used by the sales person 2. The terminal apparatus 100 acquires speech audio of the sales person 2 and the customer 3 who are participants participating in the business negotiation, and transmits the acquired speech audio (voice data) to the communication support apparatus 10. The speech audio is an example of a statement in the communication. The statement in the communication includes, for example, a statement by text data such as chat. A description is given below on the assumption that the statement in the communication is a speech.

The communication support apparatus 10 (server) is an information processing apparatus having a configuration of a computer or a system including multiple computers. The communication support apparatus 10 acquires the speech audio transmitted by the terminal apparatus 100, analyzes the acquired speech audio, and generates a response corresponding to the need of the customer 3. The response includes, for example, a proposal of recommendation information, a proposal of a specific product, and a response to a chat.

The communication support apparatus 10 controls the virtual sales person 110 displayed by the terminal apparatus 100 in accordance with the content of the response. The communication support apparatus 10 controls gestures, hand gestures, behaviors, and speeches.

The terminal apparatus 100 displays the virtual sales person 110 controlled by the communication support apparatus 10 and outputs the speech of the virtual sales person 110. Accordingly, the virtual sales person 110 can present, for example, information of a specific product corresponding to the need of the customer 3, recommendation information, and a topic such as a chat to the customer 3 and the sales person 2 in accordance with the flow of business negotiations.

As a specific example, when the need of the customer 3 is determined as "electronic invoicing", the virtual sales person 110 proposes a product related to the electronic invoicing system with a speech such as "If you would like to have electronic invoicing, how about the product A?"

As another specific example, when the virtual sales person 110 determines that the need of the customer 3 is a potential need to solve a vague problem which is "Although the artificial intelligence (AI) and digital transformation (DX) are recently popular. However, it is not clear how to do it," the virtual sales person 110 presents a message, such as "For example, is there a problem that it takes time to process an invoice? In such a case, the product A is recommended," indicating that the customer is highly likely to have a problem. Then, the virtual sales person 110 proposes the products related to the problem.

As another specific example, when the sales person 2 asks the virtual sales person 110 about a chat such as "It's been hot lately, hasn't it? How are you holding up?", the virtual sales person 110 responds "Yes, the temperature today has risen to 40 degrees Celsius, and it's very hot".

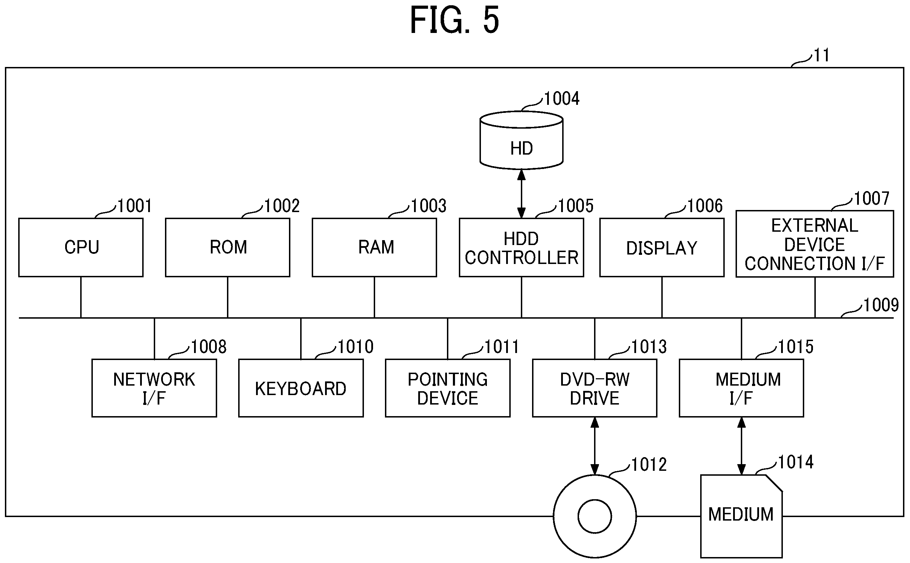

FIG. 5 is a block diagram illustrating a hardware configuration of the information processing apparatus (server) 11 according to an embodiment of the present disclosure.

As illustrated in FIG. 5, the information processing apparatus (server) 11 is configured by a computer, and includes a central processing unit (CPU) 1001, a read-only memory (ROM) 1002, a random-access memory (RAM) 1003, a hard disk (HD) 1004, a hard disk drive (HDD) controller 1005, a display 1006, an external device connection interface (I/F) 1007, a network I/F 1008, a bus 1009, a keyboard 1010, a pointing device 1011, a digital versatile disk rewritable (DVD-RW) drive 1013, and a media I/F 1015.

The CPU 1001 controls the overall operation of the information processing apparatus (server) 11. The ROM 1002 stores programs such as an initial program loader (IPL) to boot the CPU 1001. The RAM 1003 is used as a work area for the CPU 1001. The HD 1004 stores various data such as a program. The HDD controller 1005 controls the reading and writing of various data from and to the HD 1004 under the control of the CPU 1001. The display 1006 displays various information such as a cursor, menu, window, characters, or image. The external device connection I/F 1007 is an interface for connecting the information processing apparatus (server) 11 to various external devices. Examples of the external devices include, but not limited to, a universal serial bus (USB) memory and a printer. The network I/F 1008 is an interface that controls communication of data with an external device through a communication network. The bus line 1009 is, for example, an address bus or a data bus, which electrically connects the components illustrated in FIG. 5, such as the CPU 1001.

The keyboard 1010 is one example of an input device provided with a plurality of keys for allowing a user to input characters, numerals, or various instructions. The pointing device 1011 is an example of an input device (input means) that allows the user to select or execute various instructions, select an item to be processed, or move a cursor being displayed. The DVD-RW drive 1013 controls the reading and writing of various kinds of data from and to a DVD-RW 1012, which serves as a removable recording medium. The DVD-RW is one example of the removable storage medium. In another example, a digital versatile disk recordable (DVD-R) may be used as the removable storage medium. The medium I/F 1015 controls the reading or writing (storing) of data from or to a recording medium 1014 such as a flash memory.

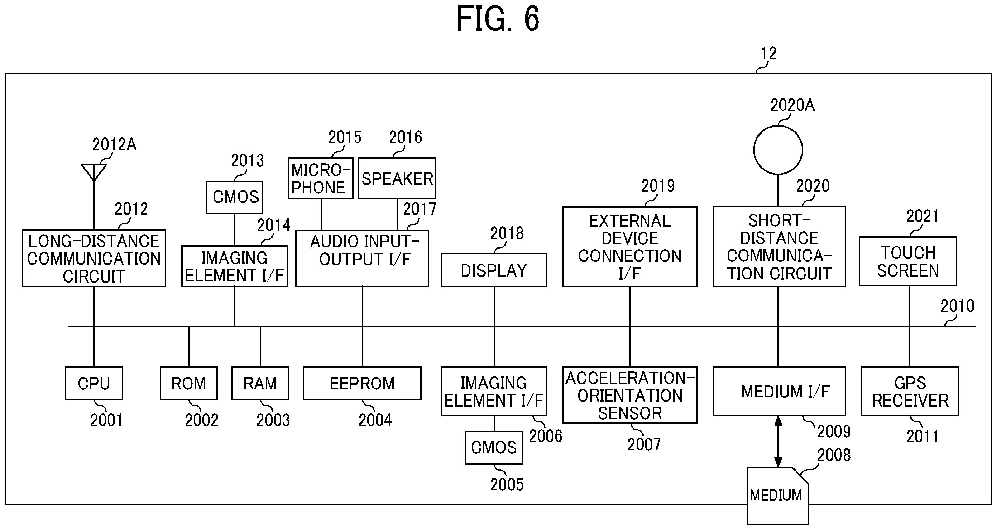

FIG. 6 is a block diagram illustrating a hardware configuration of the user terminal 12 according to an embodiment of the present disclosure.

As illustrated in FIG. 6, the user terminal 12 include a CPU 2001, a ROM 2002, a RAM 2003, an electrically erasable and programmable ROM (EEPROM) 2004, a complementary metal oxide semiconductor (CMOS) sensor 2005, an imaging element I/F 2006, an acceleration-orientation sensor 2007, a media I/F 2009, and a global positioning system (GPS) receiver 2011.

The CPU 2001 controls the overall operation of the user terminal 12. The ROM 2002 stores programs such as an initial program loader (IPL) to boot the CPU 2001. The RAM 2003 is used as a work area for the CPU 2001. The EEPROM 2004 reads or writes various data such as a control program for a smartphone under control of the CPU 2001. The CMOS sensor 2005 is an example of a built-in imaging device that captures an object (mainly, a selfimage of a user operating the user terminal 12) under control of the CPU 2001 to obtain image data. In alternative to the CMOS sensor 2005, an imaging element such as a charge-coupled device (CCD) sensor may be used. The imaging element I/F 2006 is a circuit that controls the driving of the CMOS sensor 2005. The acceleration-orientation sensor 2007 includes an electromagnetic compass or gyrocompass for detecting geomagnetism and an acceleration sensor. The medium I/F 2009 controls the reading or writing (storing) of data from or to a recording medium 2008 such as a flash memory. The GPS receiver 2011 receives a GPS signal from a GPS satellite.

The user terminal 12 includes a long- range communication circuit 2012, a CMOS sensor 2013, an imaging element I/F 2014, a microphone 2015, a speaker 2016, an audio inputoutput I/F 2017, a display 2018, an external device connection I/F 2019, a short-range communication circuit 2020, an antenna 2020a of the short-range communication circuit 2020, and a touch screen 2021.

The long-range communication circuit 2012 is a circuit that enables the user terminal 12 to communicate with other devices through the communication network. The CMOS sensor 2013 is an example of a built-in imaging device that captures an object under the control of the CPU 2001 to obtain image data. The imaging element I/F 2014 is a circuit that controls the driving of the CMOS sensor 2013. The microphone 2015 is a built-in circuit that converts sound into an electrical signal. The speaker 2016 is a built-in circuit that generates sound such as music or voice by converting an electrical signal into physical vibration. The audio inputoutput I/F 2017 is a circuit for inputting or outputting an audio signal between the microphone 2015 and the speaker 2016 under the control of the CPU 2001. The display 2018 is an example of a display device that displays an image of the object and various icons. Examples of the display 2018 include, but are not limited to, a liquid crystal display (LCD) and an organic electroluminescence (EL) display. The external device connection I/F 2019 is an interface for connecting the computer 500 to various external devices. The short-range communication circuit 2020 is a communication circuit that communicates in compliance with near field communication (NFC) and Bluetooth^{®}. The touch screen 2021 is an input device that allows the user to touch a screen of the display 2018 to operate the terminal device 12.

The user terminal 12 further includes a bus line 2010. The bus line 2010 is, for example, an address bus or a data bus, which electrically connects the components illustrated in FIG. 5, such as the CPU 2001.

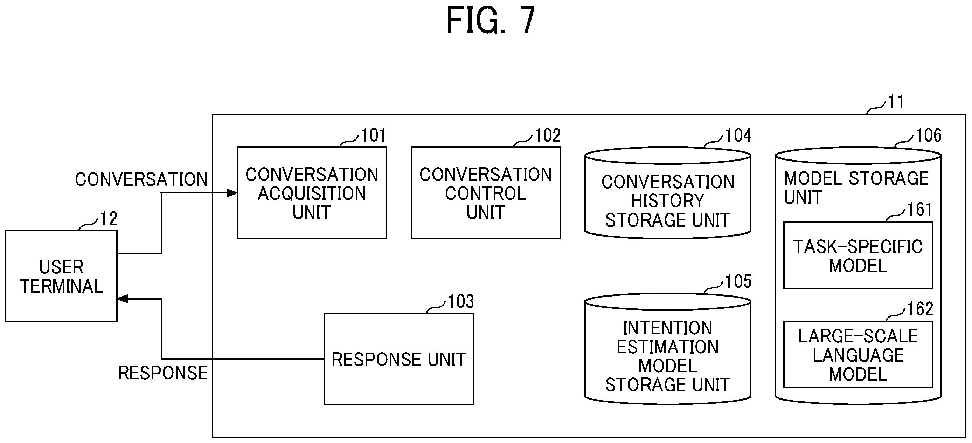

FIG. 7 is a functional block diagram of the information processing apparatus 11 according to an embodiment of the present disclosure. The information processing apparatus 11 includes a conversation acquisition unit 101, a conversation control unit 102, a response unit 103, a conversation history storage unit 104, an intention estimation model storage unit 105, and a model storage unit 106. The information processing apparatus 11 executes a program to function as the conversation acquisition unit 101, the conversation control unit 102, and the response unit 103. The conversation history storage unit 104, the intention estimation model storage unit 105, and the model storage unit 106 may be implemented by any desired memory.

The conversation acquisition unit 101 acquires conversation data from the user terminal 12. The conversation data is not limited to voice data, and may be text data. The conversation acquisition unit 101 converts the voice data acquired from the user terminal 12 into text data and stores the text data in the conversation history storage unit 104, or stores the text data acquired from the user terminal 12 in the conversation history storage unit 104.

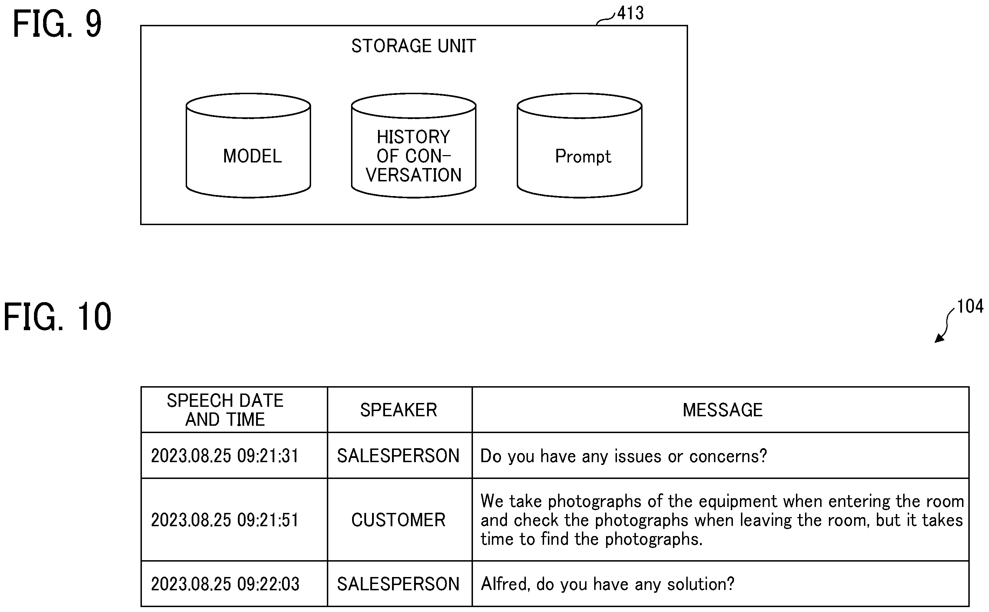

The conversation history storage unit 104 stores a history of conversations in which the conversation agent participates. The conversation history storage unit 104 stores the history of conversations (i.e., the text data into which the voice data acquired from the user terminal 12 by the conversation acquisition unit 101 has been converted or the text data acquired from the user terminal 12 by the conversation acquisition unit 101). A description is given below of an example of the history of conversations stored in the conversation history storage unit 104 with reference to FIG. 10.

FIG. 10 is a diagram illustrating the history of conversations according to an embodiment of the present disclosure. As illustrated in FIG. 10, the date and time when the speech is spoken ("speech date and time" in FIG. 10), the person who spoke the speech ("speaker" in FIG. 10), and the content of the speech ("message" in FIG. 10) of each speech (hereinafter, also referred to as a message) are stored.

A description is given below of the history of conversations. The history of the conversations is either a history of conversations between users or a history of conversations between the user and the conversation agent. The history of conversations is not limited to the history of conversations between two or more humans (e.g., the user (sales person) 2 and the conversation partner (customer) 3 in FIGS. 1 and 2) and may be the history of conversations between a human and the conversation system 1. In the case of a conversation between humans, the history of conversations is data on date and time of speech, speaker, and message (content of speech) of each speech by two or more humans. In the case of a conversation between a human and the conversation system 1 (i.e., the case where the human has a conversation with the information processing apparatus 11 via the user terminal 12), the history of conversations is data on date and time of speech, speaker, and message (content of speech) of each speech by one or more humans, and data on date and time of transmission of a response message generated by the information processing apparatus 11 to the user terminal 12 and content of the response message.

Referring back to FIG. 7, the description is continued. The conversation control unit 102 selects one or more models from among the plurality of models based on the history of conversations, and creates a response message of the conversation agent using the output data of the selected model. The conversation control unit 102 selects one or more models from among two or more models stored in the model storage unit 106 based on the history of conversations stored in the conversation history storage unit 104, and generates a response message using the output data of the selected model.

The conversation control unit 102 infers the intention of the conversation based on the history of the conversations, and select one or more models from two or more models stored in the model storage unit 106 based on the intention of the conversation. The intention of the conversation is, for example, a request for only recommendation information, a request for both recommendation information and information other than recommendation information, or a request for only information other than recommendation information. For example, the conversation control unit 102 infers the intention of the conversation using an intention estimation model stored in the intention estimation model storage unit 105 or a large-scale language model 162 stored in the model storage unit 106 based on the conversation or the summary of the conversation. The intention of the conversation is not limited to the intention inferred from the speech of one person, and may be the intention inferred from the speeches of two or more persons.

The response unit 103 transmits the response message generated by the conversation control unit 102 to the user terminal 12. The response unit 103 may convert the text data of the response message generated by the conversation control unit 102 into voice data and transmit the voice data to the user terminal 12. Alternatively, the response unit 103 may transmit the text data of the response message generated by the conversation control unit 102 to the user terminal 12.

The intention estimation model storage unit 105 stores a machine learning model (intention estimation model) that has been trained to output the intention of a conversation when the history of the conversation is input. The history of conversations includes, for example, a conversation or a summary of the conversation (in this case, the conversation control unit 102 generates the summary of the conversation).

The model storage unit 106 stores a plurality of models including a large-scale language model and a task-specific model acquired by machine learning specialized in a specific task different from the large-scale language model. The model storage unit 106 stores two or more models including one large-scale language model 162 and one or more task-specific models 161. A description is given below of the large-scale language model 162 and the task-specific model 161.

The large-scale language model 162 is a general-purpose natural language processing model, and is also called a large-scale language model (LLM). When the conversation system 1 generates a response message using the output data of the large-scale language model 162, the conversation system 1 can express the need of the conversation partner (customer) 3 in the response message using an expression that is not included in the conversation between the user (sales person) 2 and the conversation partner (customer) 3. In other words, the conversation system 1 can provide at least one of a message indicating the understanding of the need of the conversation partner (customer) 3 (e.g., potential need) and a message indicating a question regarding the need of the conversation partner (customer) 3 (e.g., a question for acquiring additional information).

The task-specific model 161 is a model acquired by machine learning specialized for a specific task. For example, the specific task includes a specific business such as recommending a product as a solution to the need of the conversation partner (customer) 3. The recommendation of the product is merely an example, and the specific task includes a task related to an organization such as a company or business of a specific industry. The task includes not only the recommendation but also an action of providing information of a product or a company, providing information on a search result, and providing product information such as a usage of a product.

For example, the task-specific model 161 is a recommendation engine that searches for and recommends a product. For example, the task-specific model 161 may be a recommendation engine for each type of product to be recommended (e.g., a recommendation engine that recommends a product or a recommendation engine that recommends a service). For example, the task-specific model 161 may be a recommendation engine for each basis of recommendation (e.g., a recommendation engine that performs recommendation based on a history of conversations, or a recommendation engine that performs recommendation based on a past purchase history). When the conversation system 1 generates a response message using output data of the task-specific model 161 such as the recommendation engine, the user (sales person) 2 can provide a message indicating a product that can be proposed to the conversation partner (customer) 3.

The task-specific model 161 is not limited to the recommendation engine, and may include a model for searching or referring to information used when the user (sales person) 2 generates a daily sales report.

The conversation control unit 102 can select one or more models from two or more models stored in the model storage unit 106 based on information of the conversation partner (customer) 3 (e.g., a past purchase history) in addition to the history of conversations. The past purchase history may be a database indicating the past purchase history. Alternatively, the purchase history may be determined based on the history of conversations.

The conversation control unit 102 can select a recommendation engine that recommends a product other than the product recommended to the conversation partner (customer) 3 by the user (sales person) 2 from two or more models stored in the model storage unit 106. In this case, the conversation control unit 102 determines the product already recommended to the conversation partner (customer) 3 by the user (sales person) 2 based on the history of the conversations between the user (sales person) 2 and the conversation partner (customer) 3.

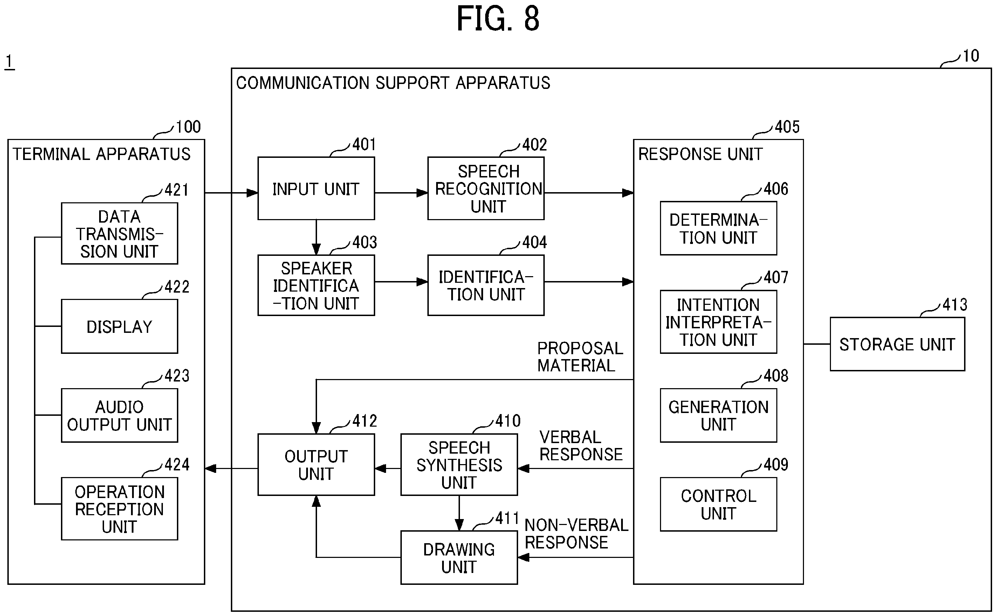

FIG. 8 is a functional block diagram of the communication support apparatus 10 and the terminal apparatus 100 according to an embodiment of the present disclosure.

The terminal apparatus 100 causes the CPU 2001 included in the terminal apparatus 100 to execute predetermined programs to implement, for example, each of the functional configurations as illustrated in FIG. 8. In FIG. 8, the terminal apparatus 100 includes a data transmission unit 421, a display 422, an audio output unit 423, and an operation reception unit 424.

The data transmission unit 421 acquires the speech audio of participants participating in a communication and the speech audio of the sales person 2 and the customer 3 participating in a business negotiation. The data transmission unit 421 transmits the acquired speech audio (voice data) to the communication support apparatus 10.

The display 422 executes display processing of displaying video of the virtual sales person 110, recommendation information to be proposed to the customer 3, and a text of the speech audio of the sales person 2 participating in the business negotiation and the customer 3, which are received from the communication support apparatus 10.

The audio output unit 423 executes audio output processing of outputting a speech audio of the conversation agent received from the communication support apparatus 10.

The operation reception unit 424 executes operation receiving processing of receiving an operation on the terminal apparatus 100.

The communication support apparatus 10 implements the functional configuration as illustrated in FIG. 8, for example, by executing predetermined programs stored in a storage medium in a computer included in the communication support apparatus 10. In FIG. 8, the communication support apparatus 10 includes functional units such as an input unit 401, a speech recognition unit 402, a speaker identification unit 403, an identification unit 404, a response unit 405, a speech synthesis unit 410, a drawing unit 411, and an output unit 412. At least a part of the functional units described above may be implemented by hardware.

In the communication support apparatus 10, a storage unit 413 is implemented by the storage devices such as the HD 1004 and the HDD controller 1005. The storage unit 413 may be implemented by, for example, a storage server provided outside the communication support apparatus 10 or a cloud service.

The input unit 401 receives input of the speech audio of the sales person 2 and the speech audio of the customer 3 transmitted by the terminal apparatus 100.

The speech recognition unit 402 performs known speech recognition processing on the speech audio accepted by the input unit 401, and converts the acquired speech audio into text. When the speech in the communication input to the input unit 401 is text data, the communication support apparatus 10 may not include the speech recognition unit 402.

The speaker identification unit 403 identifies the speech of the sales person 2 by a known speaker recognition technique, and identifies the speech other than the speech of the sales person 2 as the speech of the customer 3. When the speech in the communication input to the input unit 401 is text data, the speaker identification unit 403 may determine the participant who has made a speech by the terminal apparatus that has input the text. For example, when text data is input from the terminal apparatus 100 of the sales person 2, the speaker identification unit 403 may determine the participant who input the text data as the sales person 2, and when text data is input from another terminal apparatus, the speaker identification unit 403 may determine the participant who input the text data as the customer 3.

The identification unit 404 executes identification processing for identifying the attribute of the participant identified by the speaker identification unit 403. The identification unit 404 may identify the attribute of the participant who has made a speech, and the speaker identification unit 403 may not identify the participant.

The attribute (role) of the participant, such as the customer, the sales person, or the support person, to which the speech of the participant corresponds may be registered in advance in the communication support apparatus 10. In this case, the identification unit 404 can identify the attribute from the speech of the participant who has spoken. When it is difficult to register the speech of the customer in advance, only the sales person and the support person may be registered in the communication support apparatus 10, and the attribute of the participant who has spoken the other speeches may be automatically set in the attribute (role) of the customer.

The profile information (such as role, position, status, specific industry, type of industry, occupation, and gender) of the participant may be registered in the communication support apparatus 10 in advance. In this case, the identification unit 404 may identify the attribute (the sales person 2 or the customer 3) of the participant who has made the speech based on the profile information of the speaker specified by the speaker identification unit 403. It may be difficult to register the profile information of the customer in advance. In this case, when the profile information of the participant who has made a speech is not registered, the attribute of the participant who has made the speech may be automatically registered in the attribute (role) of the customer.

The communication support apparatus 10 may collect voice data from various speakers in advance, analyze voice features such as voice tone, intonation, speed, and language accent from the collected voice data, and perform machine learning of a model for identifying an attribute.

The response unit 405 executes response processing for responding to the speech input to the input unit 401. The response unit 405 includes, for example, a determination unit 406, an intention interpretation unit 407, a generation unit 408, and a control unit 409.

The determination unit 406 decides the action of the virtual sales person 110 according to the output result of the intention interpretation unit 407. The determination unit 406 decides the action of the virtual sales person 110, for example, whether to propose a specific product to the customer 3, whether to propose a product related to a problem after presenting a candidate for the problem, or whether to have a chat. The following is a specific example of processing. The input to the determination unit 406 is the output result of the intention interpretation unit 407. Specifically, the input is any of three types of "proposal of specific product", "proposal of product related to a problem after presenting a candidate for the problem (potential need)," and "chat". When the determination unit 406 performs processing, for example, the determination unit 406 selects an action defined by a rule. The rule is, for example, that the determination unit 406 determines to use a model using a known recommendation logic of the model of the storage unit 413 when the output result of the intention interpretation unit 407 is "proposal of specific product". For example, when the output result of the intention interpretation unit 407 is the "proposal of product related to a problem after presenting a candidate for the problem (potential need)," the determination unit 406 determines to use the model using the general-purpose large-scale language model and the known recommendation logic of the model of the storage unit 413, and "prompt for presenting a problem candidate" of prompt of the storage unit 413. For example, when the output result of the intention interpretation unit 407 is the "chat," the determination unit 406 determines to use the general-purpose large-scale language model of the model of the storage unit 413 and "prompt for chat" of the prompt of the storage unit 413. The procedure for determining the processing may be determined by a rule, or may be determined by using the general-purpose large-scale language model of the model of the storage unit 413 and the prompt for determining the processing from among the prompts of the storage unit 413.

The intention interpretation unit 407 analyzes the speech audio (hereinafter, referred to as speech text) converted into text by the speech recognition unit 402 by a natural language processing (NLP) algorithm, and extracts, for example, an intention of speech, a keyword, and an area of interest.

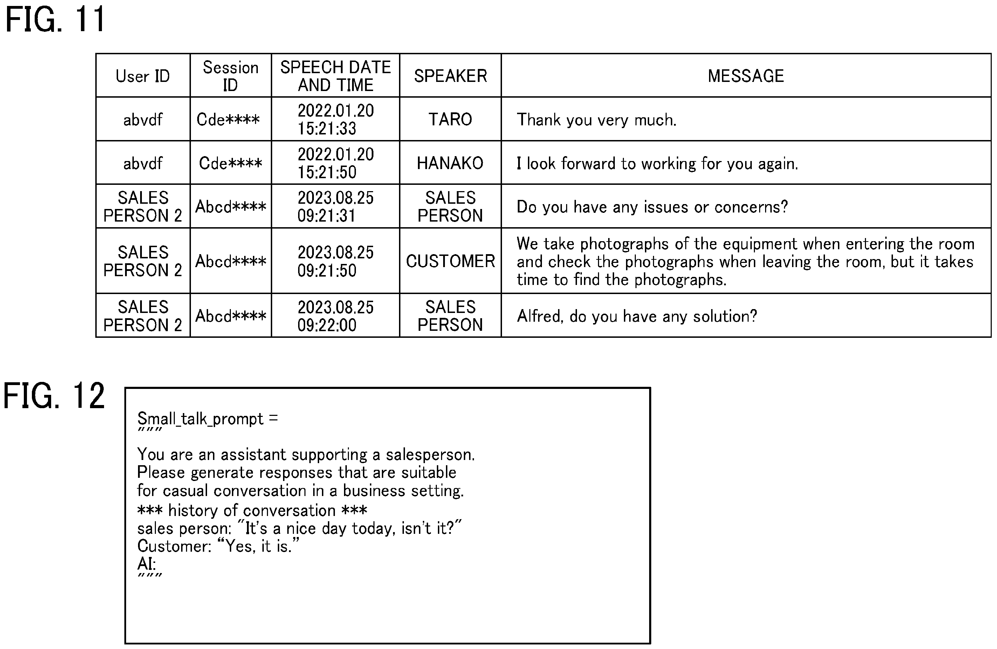

The intention interpretation unit 407 determines, for example, from the speech of the customer 3 or the sales person 2, whether what is requested as the speech of the virtual sales person 110 is a chat, a proposal of a specific product, or a conversation for confirming a problem (a proposal of a product related to a problem after presenting a candidate of the problem). The intention interpretation unit 407 determines the action of the virtual sales person 110, such as whether to propose a specific product to the customer 3, whether to propose a product related to a problem after presenting a candidate for the problem, or whether to have a chat, based on the speech audio of the sales person 2 or the speech audio of the customer 3, which is converted into a text by the speech recognition unit 402. The following is a specific example of processing. The input to the intention interpretation unit 407 is data of the history of conversations stored in the storage unit 413. For example, the intention interpretation unit 407 searches for and extracts a conversation related to the current conversation from the history of conversations stored in the format of FIG. 11, which is acquired by converting the speech of the sales person 2 or the customer 3 or both into text. For example, the intention interpretation unit 407 searches and extracts using Session ID. The intention interpretation unit 407 refers to the model and prompt in the storage unit 413. For example, the intention interpretation unit 407 refers to a uniform resource locator (URL) and an application programming interface (API) key for an API connection to the general-purpose large-scale language model from the model of the storage unit 413, and the prompt for interpretation of intention from the prompt of the storage unit 413, and then the intention interpretation unit 407 adds the searched and extracted history of conversations to the prompt and inputs to the model. The intention interpretation unit 407 may add all history of conversations having the same Session ID to the history of conversations to be added to the prompt. Alternatively, the intention interpretation unit 407 may add a part of the history of conversations having the same Session ID. The intention interpretation unit 407 outputs any one of three types of "proposal of specific product", "proposal of product related to a problem after presenting a candidate for the problem (potential need)", and "chat".

The generation unit 408 executes the action determined by the determination unit 406 and generates a response to the virtual sales person 110. For example, the generation unit 408 refers to the data of the history of conversations stored in the storage unit 413, refers to the model and the prompt in the storage unit 413, and generates the response. For example, when the determination unit 406 determines to perform the chat, the generation unit 408 use the large-scale language model and the prompt for the chat to generate a response to the chat. For example, when the determination unit 406 determines to propose a specific product, the generation unit 408 acquires information of the specific product and generates a message for proposing the specific product based on the acquired information. The determination unit 406 may use a method of acquiring the information of the specific product. For example, a result of searching the information of the storage unit 413 may be used, an output result of a model learned to respond to the specific product may be used, or the information may be acquired using retrieval-augmented generation (RAG) which is a known technique. For example, when the determination unit 406 decides to propose a product related to a problem after presenting a candidate for the problem, the generation unit 408 generates a message for proposing the problem and a product for the problem using a method described below.

The control unit 409 executes control processing for controlling the conversation agent in accordance with the content of the response generated by the generation unit 408. For example, the control unit 409 outputs a verbal response included in the content of the response to the speech synthesis unit 410. The control unit 409 also outputs a non-verbal response to the drawing unit 411 and outputs a proposal material to the output unit 412 to generate the video of the virtual sales person 110.

The speech synthesis unit 410 executes synthesis speech processing to convert the verbal response input by the response unit 405 into speech by a speech synthesis technique.

The drawing unit 411 executes drawing processing for drawing the conversation agent in accordance with the non- verbal response input by the response unit 405. For example, the drawing unit 411 reflects a facial expression, line of sight, posture, emotion, gesture, and a paralanguage on the drawing of the virtual sales person 110 in accordance with the non-verbal response. The drawing unit 411 also draws a lip sync that moves the mouth of the virtual sales person 110 in accordance with the speech of the virtual sales person 110.

The output unit 412 executes output processing to output, to the terminal apparatus 100, a video including the sound of the conversation agent converted into sound by the speech synthesis unit 410, and the conversation screen and the proposal material drawn by the drawing unit 411. For example, the output unit 412 transmits the video of the virtual sales person 110 to the terminal apparatus 100 via the communication network N.

The system configuration of the conversation system 1 illustrated in FIG. 8 is an example. For example, the conversation system 1 may be configured by one terminal apparatus 100 having the functional configuration of the communication support apparatus 10 illustrated in FIG. 8. In this case, the terminal apparatus 100 serves as the conversation system 1. The terminal apparatus 100 may include at least part of the functional units of the communication support apparatus 10. For example, the terminal apparatus 100 may include the speech synthesis unit 410, the drawing unit 411, and the output unit 412.

FIG. 9 is a diagram illustrating the storage unit 413 according to an embodiment of the present disclosure.

The "history of conversations" in FIG. 9 indicates conversation history data that stores the history of conversations. For example, the conversation history data is data stored in the format of FIG. 11. For example, the conversation history data is in a format such as j avascript object notation (JSON), text, or comma-separated values (CSV). For example, a User ID for identifying a system user and a Session ID for identifying a set of conversations are assigned to the conversation history data. The Session ID is, for example, a value that is the same from the start to the end of the business negotiation. The history of conversations related to the current conversation can be searched and extracted using the Session ID.

The "model" in FIG. 9 indicates a model storage unit that stores various models used to implement the communication support apparatus 10.

For example, the model is a rule-based program that performs processing according to specific rules.

For example, the model is a general-purpose large-scale language model that is, for example, a sentence generation language model called generative pre-trained transformer 4 (GPT-4). For example, a feature of the general-purpose large-scale language model is that text information called prompt is input and an output according to an instruction written in prompt is returned as text information.

For example, the model is a model that is specialized for responding a particular response. Examples of the model that are specialized for responding a particular response is a recommendation engine machine-learned to respond a product, a model using a known recommendation logic, a model, for which a known RAG technique may be used, to generate an expression for searching for a product in response to an input query for search, and to respond a product including a text similar to the generated expression, a model learned to respond to an input query with a product having a high degree of relevance to the input query, and a model acquired by fine-tuning a general-purpose large-scale language model.

Each model may be installed in the server of the communication support apparatus 10 to be directly called, or may be called using an API connection. When the API connection is performed, the model storage unit may be configured to store information such as a URL and a key to be used for a connection destination of the model.

The "prompt" in FIG. 9 indicates a prompt group when the general-purpose large-scale language model is operated. An example of the prompt as an input to the general-purpose large scale language model is described later with reference to FIG. 12.

A description is given below of a specific example of recommending a product other than the product recommended to the customer by the sales person. For example, when the output result of the intention interpretation unit 407 is a "proposal of specific product," a case where the determination unit 406 decides to use a model using a known recommendation logic among the models in the storage unit 413 is described below.

When the generation unit 408 generates a response after acquiring a response of the recommended product using a model using the known recommendation logic, a product other than the product recommended by the sales person can be recommended by the following procedure.

The communication support apparatus 10 uses the model using a known recommendation logic to output recommended products, and uses the general-purpose large-scale language model, the history of conversations, and the prompt for excluding overlapping products to exclude products already included in the history of conversations from the output recommended products described above. In addition, in the process of accumulating the history of conversations, the communication support apparatus 10 extracts the products recommended by the sales person from the history of the conversations at predetermined time intervals, and stores information of the recommended products. Then, the communication support apparatus 10 can refer to the information of the recommended products from the recommended products output using a model using the known recommendation logic to recommend the product other than the products recommended by the sales person.

FIG. 11 is a diagram illustrating the history of conversations according to an embodiment of the present disclosure.

As illustrated in FIG. 11, for each speech (also referred to as a message), the date and time when the speech was made ("speech date and time" in FIG. 11), the person who made the speech ("speaker" in FIG. 11), and the content of the speech ("message" in FIG. 11) are stored. The search and extraction are performed using a User ID for identifying a system user and a Session ID for identifying a set of conversations. The Session ID is, for example, a value that is the same from the start to the end of the business negotiation.

FIG. 12 is a diagram illustrating the prompt (prompt for a chat) of the storage unit 413 according to an embodiment of the present disclosure. FIG. 12 illustrates an example of the prompt used when the generation unit 408 generates a response. For example, FIG. 12 illustrates an example of the prompt used when the determination unit 406 determines to perform a chat and determines to use the general-purpose large-scale language model and the prompt for chat to respond. In the item "history of conversations" of the prompt of FIG. 12, the sales person said, "It's a nice day today, isn't it?" and the customer said, "Yes, it is," and this is a portion for inputting a text in which the conversations of the Session ID related to the current conversation of FIG. 11 are extracted and arranged in order of date and time. The generation unit 408 inputs the prompt to the general-purpose large-scale language model to generate a response. There is a plurality of prompts. The response is generated by inputting the prompt selected by the determination unit 406 to the general-purpose large-scale language model selected by the determination unit 406.

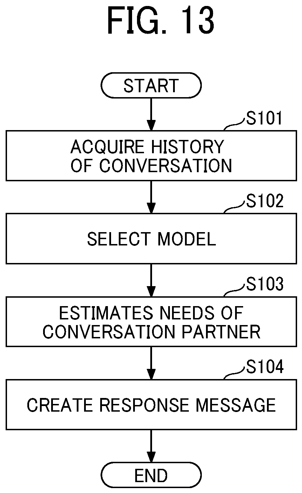

FIG. 13 is a flowchart of conversation control processing according to an embodiment of the present disclosure.

In step S101, the conversation control unit 102 acquires the history of conversations before the predetermined inquiry message (e.g., "Alfred" in FIG. 2) from the history of conversations stored in the conversation history storage unit 104.

In step S102, the conversation control unit 102 selects a model corresponding to the intention of the conversations acquired in step S101 from among the models stored in the model storage unit 106 (in particular, two or more models including one large-scale language model 162 and one or more task-specific models 161).

In step S103, the conversation control unit 102 infers the need of the conversation partner (customer) 3. Specifically, the conversation control unit 102 outputs the recommendation information of a product to be recommended to the conversation partner (customer) 3 (detailed information of the product), understanding of need of the conversation partner (customer) 3 (e.g., potential need), or questions regarding the need of the conversation partner (customer) 3 (e.g., questions for acquiring additional information) using the model selected in the step S102.

In step S104, the conversation control unit 102 generates a response message using the information output in step S103.

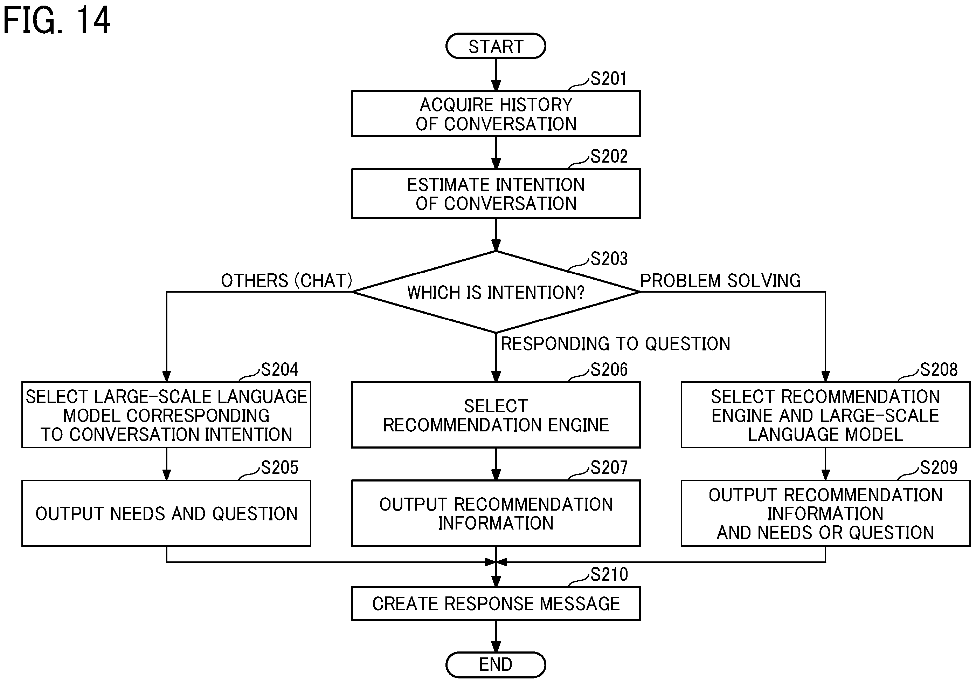

FIG. 14 is a flowchart of conversation control processing (selection of a recommendation engine and a large-scale language model) according to an embodiment of the present disclosure.

In step S201, the conversation control unit 102 acquires the history of conversations conducted before the predetermined inquiry message (e.g., "Alfred" in FIG. 2) from the history of conversations stored in the conversation history storage unit 104.

In step S202, the conversation control unit 102 infers the intention of the conversation acquired in step S201 (i.e., the intention of the human asking the conversation system 1).

When the task-specific model 161 is a recommendation engine, the intention of the conversation may be divided into three, which are "a request for only recommendation information (e.g., in the case of a conversation requesting a response to a question about a product ("responding to a question" in FIG. 14))," "a request for both the recommendation information and other information other than the recommendation information (e.g., in the case of a conversation about recommendation but not specifying a product ("problem solving" in FIG. 14))," and "a request for only other information (response to a chat) other than the recommendation information ("others (chat) "in FIG. 14)".

In step S203, the conversation control unit 102 determines which intention the intention inferred in step S202 is. When the intention of the conversation is "others (chat)," the process proceeds to step 204. When the intention of the conversation is " problem solving," the process proceeds to step 206. When the intention of the conversation is "problem solution," the process proceeds to step 208. For example, the conversation control unit 102 may determine whether the intention of the conversation is an intention to use the task-specific model 161, and when the intention is not an intention to use the task-specific model 161, the conversation control unit 102 may use the large-scale language model 162.

For example, in step S203, the conversation control unit 102 can determine the intention by voice command recognition. For example, the conversation control unit 102 proceeds to step S204 in the case of "Can you have a chat?", proceeds to step S206 in the case of "Can you search for the product I'm about to talk about?", and proceeds to step S208 in the case of "Are there any other good products?", by the voice of the sales person.

In step S204, the conversation control unit 102 selects a model corresponding to the intention of the conversation determined in step S203 (i.e., a large-scale language model corresponding to the intention of the conversation of "others (chat)") from among the models stored in the model storage unit 106.

In step S205, the conversation control unit 102 outputs at least one of a potential need and a question for acquiring additional information, using the large-scale language model selected in step S204.

In step S206, the conversation control unit 102 selects a model corresponding to the intention of the conversation determined in step S203 (i.e., a recommendation engine corresponding to the intention of the conversation of "responding to a question") from among the models stored in the model storage unit 106.

In step S207, the conversation control unit 102 outputs the recommendation information using the recommendation engine selected in step S206.

In step S208, the conversation control unit 102 selects a model corresponding to the intention of the conversation determined in step S203 (i.e., a recommendation engine and a large-scale language model corresponding to the intention of the conversation of "problem solving") from among the models stored in the model storage unit 106.

In step S209, the conversation control unit 102 outputs recommendation information using the recommendation engine selected in step S208, and outputs at least one of a potential need and a question for acquiring additional information using the large-scale language model selected in step S208.

In step S210, the conversation control unit 102 creates a response message using the data output in steps S205, S207, or S209. For example, the conversation control unit 102 may create the response message using a template. Alternatively, the conversation control unit 102 may create the response message based on a rule. Alternatively, the conversation control unit 102 may create a response message using a large-scale language model.

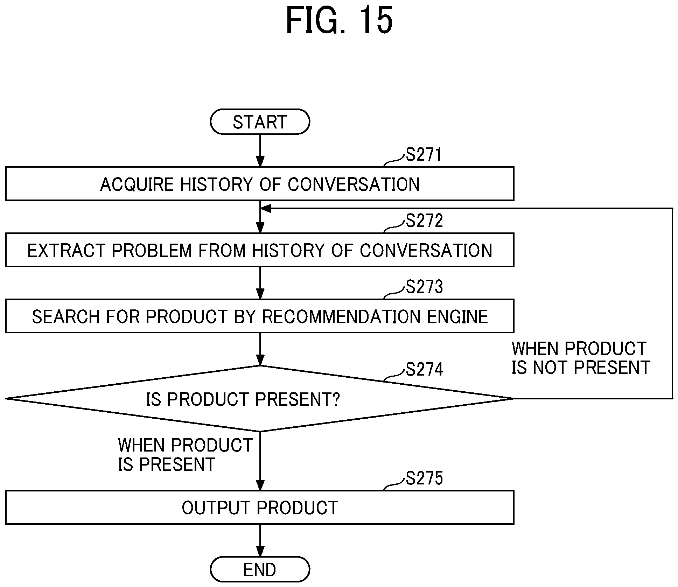

FIG. 15 is a flowchart of a process of responding to a question (step S207 in FIG. 14) according to an embodiment of the present disclosure.

In step S271, the conversation control unit 102 acquires the history of conversations.

In step S272, the conversation control unit 102 extracts the problem of the customer 3 from the history of conversations acquired in step S271.

In step S273, the conversation control unit 102 searches for a product (specific product) for solving the problem extracted in step S272 by the recommendation engine.

In step S274, the conversation control unit 102 determines the presence or absence of the product. When the product is present, the process proceeds to step S275, and when the product is not present, the process returns to step S272.

In step S275, the conversation control unit 102 outputs the product.

For example, an example of the conversation of FIG. 15 is as follows. The customer 3 asks to the sales person 2, "I would like to digitize invoices and delivery slips." The sales person 2 asks to the virtual sales person 110, "Is there any product suitable for the customer 3?" The virtual sales person 110 replies, "How about the voucher electronic storage service?"

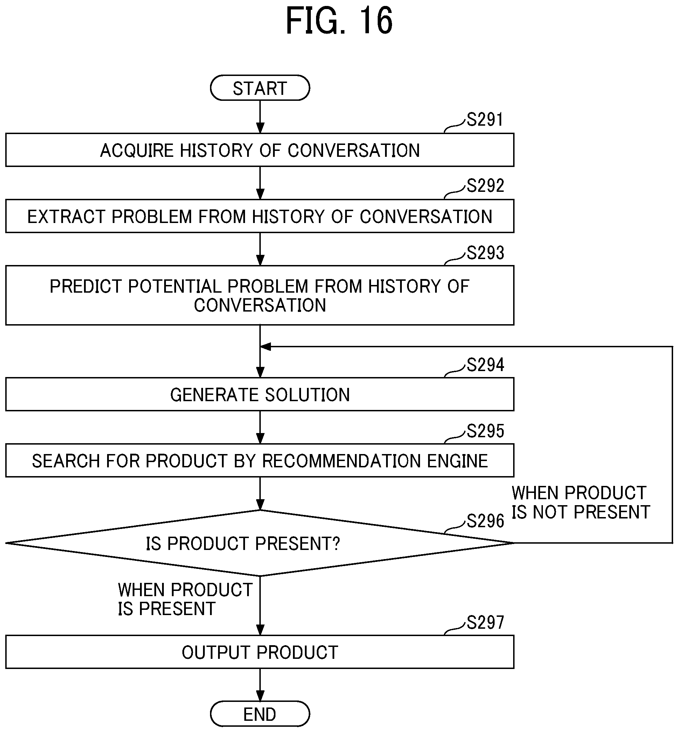

FIG. 16 is a flowchart of a process for problem solving (step S209 in FIG. 14) according to an embodiment of the present disclosure.

In step S291, the conversation control unit 102 acquires the history of conversations.

In step S292, the conversation control unit 102 extracts the problem of the customer 3 from the history of conversations acquired in step S291.

In step S293, the conversation control unit 102 predicts a potential problem from the history of conversations acquired in step S291.

In step S294, the conversation control unit 102 generates a solution for solving the potential problem predicted in step S293.

In step S295, the conversation control unit 102 searches for a product (specific product) for solving the problem extracted in step S292 by the recommendation engine.

In step S296, the conversation control unit 102 determines the presence or absence of the product. When the product is present, the process proceeds to step S297, and when the product is not present, the process returns to step S294.

In step S297, the conversation control unit 102 outputs the product and the solution.

For example, an example of the conversation of FIG. 16 is as follows. The sales person 2 asks to the virtual sales person 110, "Alfred, is there any other good product?" The virtual sales person 110 asks to customer 3, "As long as we listen to the conversation so far, do you have problems that your in-house training program is not sufficient and there is a problem in training new employees?" The customer 3 replies, "As I recall, I think the HR said something like that." The virtual sales person 110 says, "Let me propose this product, "[sales manual] scram P online training meeting pack for retail store." With this product, you can expect to introduce more fulfilling in-house training programs and improve the quality of your trainers."

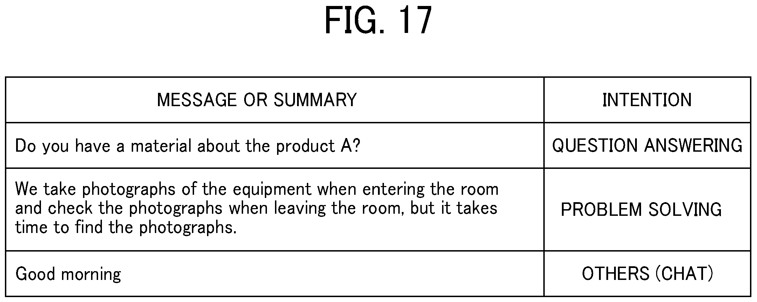

FIG. 17 is the intentions of conversations according to an embodiment of the present disclosure.

For example, when a message included in the history of conversations or a summary of the message is "Do you have a material about the product A?" (i.e., in the case of a conversation asking for an answer to a question about a product), the intention of the conversation is "response to the question."

For example, when the message included in the history of the conversations or the summary of the message is "We take photographs of the equipment when entering the room and check the photographs when leaving the room, but it takes time to find the photographs." (i.e., in the case of a conversation about recommendation but not designating a product), the intention of the conversation is "problem solving".

For example, when the message included in the history of the conversations or the summary of the message is "Good morning." (i.e., in the case of a chat), the intention of the conversation is "Others (chat)".

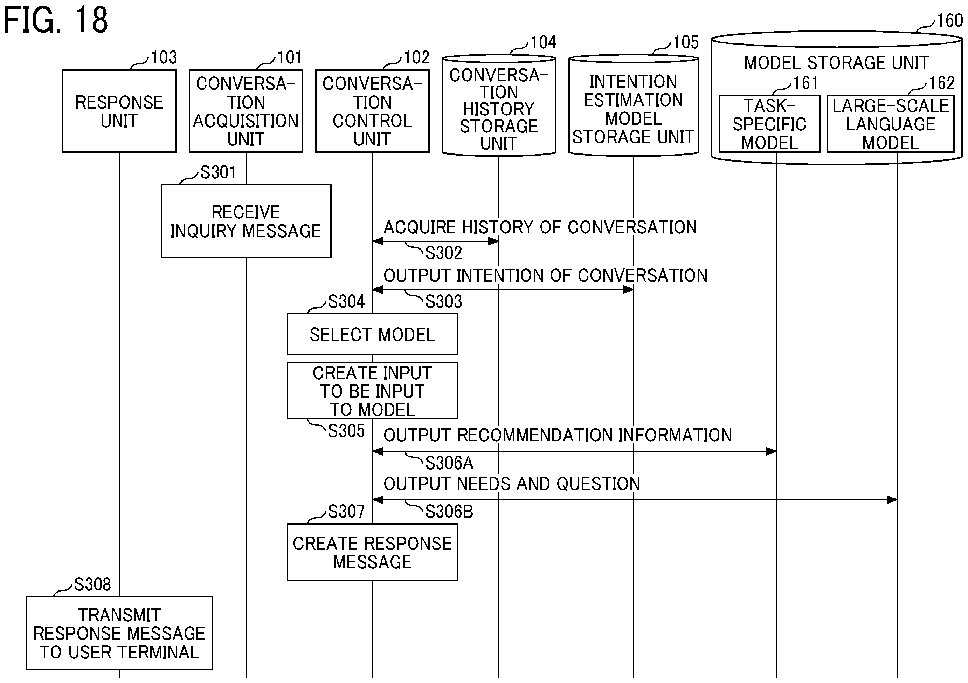

FIG. 18 is a sequence diagram illustrating the conversation control processing according to an embodiment of the present disclosure.

In step S301, the conversation acquisition unit 101 receives a predetermined inquiry message (e.g., "Alfred" in FIG. 2) from the user terminal 12.

In step S302, the conversation control unit 102 acquires the history of conversations performed before the inquiry message of step S301 from the history of conversations stored in the conversation history storage unit 104.

In step S303, the conversation control unit 102 infers the intention of the conversation acquired in step S302. For example, the conversation control unit 102 outputs the intention of the conversation using the intention estimation model stored in the intention estimation model storage unit 105.

In step S304, the conversation control unit 102 selects a model corresponding to the intention of the conversation inferred in step S303 from among the models (to be specific, two or more models including one large-scale language model and one or more task-specific models) stored in the model storage unit 106.

In step S305, the conversation control unit 102 creates input data to be input to the model selected in step S304. For example, the conversation control unit 102 creates a search query to be input to the recommendation engine. For example, the conversation control unit 102 creates a prompt to be input to the large-scale language model.

In step S306a, the conversation control unit 102 inputs the input data (in this case, the search query) created in step S305 to the model (in this case, the task-specific model 161, which is assumed to be the recommendation engine) selected in step S304 to cause the model to output the recommendation information.

In step S306b, the conversation control unit 102 inputs the input data (in this case, the prompt) created in step S305 to the model selected in step S304 (in this case, the large-scale language model 162) to cause the model to output at least one of a potential need and a question for acquiring additional information.

In step S307, the conversation control unit 102 creates a response message using the outputs in steps S306a and S306b.

In step S308, the response unit 103 transmits the response message created in step S307 to the user terminal 12.

As described above, according to an embodiment of the present disclosure, for example, it is suitable to select a large-scale language model to respond for a general topic such as a chat, and it is suitable to select a task-specific model specialized for a specific task to respond for a topic related to the specific task such as recommendation of a product, and thus the conversation agent can generate an appropriate response according to the content of the conversation between the user and the conversation partner. In addition, according to an embodiment of the present disclosure, since the conversation agent selects both the large-scale language model and the task-specific model to respond, the conversation system 1 can provide not only information of a product proposed by the user (sales person) to the conversation partner (customer), but also potential need of the conversation partner (customer). As a result, the conversation system 1 can sufficiently uncover the potential need of the conversation partner (customer) and expand the opportunity for business negotiations.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (11) comprising:
a model storage unit (105, 106) configured to store a plurality of models including a large-scale language model and a task-specific model different from the large-scale language model, the task-specific model having been acquired by machine learning specialized in a specific task;
a conversation history storage unit (104) configured to store a history of conversations in which a conversation agent participates; and
a conversation control unit (102) configured to select one or more models from among the plurality of models based on the history of conversations and create a response message of the conversation agent using output data of the selected model.

2. The information processing apparatus (11) according to claim 1,
wherein the conversation control unit (102) is configured to infer an intention of the conversations based on the history of conversations and select one or more models among the plurality of models based on the intention of the conversations.

3. The information processing apparatus (11) according to claim 1 or 2,
wherein the history of conversations is one of the history of conversations between users and the history of conversations between the user and the conversation agent.

4. The information processing apparatus (11) according to claim 1, 2 or 3,
wherein the task-specific model is a recommendation engine.

5. The information processing apparatus (11) according to claim 4,
wherein the conversation agent is a virtual sales person that supports business negotiations and the recommendation engine is a recommendation engine that recommends a product.

6. The information processing apparatus (11) according to any one preceding claim,
wherein the conversations are performed between a sales person and a customer, and
wherein the conversation control unit (102) is configured to select the one or more models among the plurality of models based on information on the customer in addition to the history of conversations.

7. The information processing apparatus (11) according to any one preceding claim,
wherein the conversations are performed between a sales person and a customer, and
wherein the conversation control unit (102) is configured to select, as the one or more models, a recommendation engine that recommends a product other than the product recommended to the customer by the sales person.

8. The information processing apparatus (11) according to any one preceding claim, further comprising:
a conversation acquisition unit (101) configured to acquire voice data acquired in the conversations from a user terminal; and
a response unit (103) configured to transmit the response message including voice data to the user terminal.

9. The information processing apparatus (11) according to any one preceding claim,
wherein the conversation control unit (102) is configured to select the one or more models from among the plurality of models further based on an intention of the conversations, the intention being one of a proposal for a specific product, a proposal for a product related to an issue after presenting a candidate for the issue, and a chat, wherein
when the intention is the proposal for the specific product, the response message includes a product to solve an issue of a customer using the task-specific model,
when the intention is the proposal for the product related to the issue after presenting the candidate for the issue, the response message includes a product to solve the candidate for the issue using the task-specific model and the large-scale language model, and
when the intention is the chat, the response message includes the chat using the large-scale language model.

10. A conversion system comprising:
the information processing apparatus (11) of any one preceding claim; and
a user terminal,
wherein the conversation acquisition unit (101) of the information processing apparatus (11) is configured to acquire conversation data from the user terminal, the history of conversions being based on the conversation data, and
wherein the response unit (103) is configured to transmit the response message to the user terminal.

11. An information processing method comprising:
storing, in a memory, a plurality of models including a large-scale language model and a task-specific model different from the large-scale language model, the task-specific model having been acquired by machine learning specialized in a specific task;
storing, in the memory, a history of conversations in which a conversation agent participates;
selecting (S102) one or more models from among the plurality of models based on the history of conversations; and
creating (S104) a response message of the conversation agent using output data of the selected model.

12. Carrier means carrying computer readable code for controlling a computer system to carry out the method of claim 11.
